(19) Europäisches Patentamt
European Patent Office
Office européen des brevets

(11) **EP 3 542 042 B1**

(12) **EUROPÄISCHE PATENTSCHRIFT**

(45) Veröffentlichungstag und Bekanntmachung des Hinweises auf die Patenterteilung:
**09.12.2020   Patentblatt 2020/50**

(21) Anmeldenummer: **17780744.3**

(22) Anmeldetag: **09.10.2017**

(51) Int Cl.:
*F02D 41/00* *(2006.01)*    *F02D 41/14* *(2006.01)*
*F02D 41/24* *(2006.01)*    *F02D 41/28* *(2006.01)*
*F02D 13/02* *(2006.01)*    *F01L 13/00* *(2006.01)*
*F02D 13/00* *(2006.01)*    *F02D 41/22* *(2006.01)*

(86) Internationale Anmeldenummer:
**PCT/EP2017/075605**

(87) Internationale Veröffentlichungsnummer:
**WO 2018/091201 (24.05.2018 Gazette 2018/21)**

(54) **VERFAHREN ZUR ÜBERWACHUNG VON IM VENTILTRIEB EINES VERBRENNUNGSMOTORS AUFTRETENDEN ABWEICHUNGEN UND ELEKTRONISCHES MOTORSTEUERGERÄT ZUR AUSFÜHRUNG DES VERFAHRENS**

METHOD FOR MONITORING DEVIATIONS OCCURRING IN THE VALVE DRIVE OF AN INTERNAL COMBUSTION ENGINE, AND ELECTRONIC ENGINE CONTROL UNIT FOR EXECUTING THE METHOD

PROCÉDÉ DE SURVEILLANCE D'ÉCARTS APPARAISSANT DANS LE MÉCANISME DE DISTRIBUTION D'UN MOTEUR À COMBUSTION INTERNE ET UNITÉ DE COMMANDE ÉLECTRONIQUE DU MOTEUR POUR LA MISE EN ŒUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2016   DE 102016222533**

(43) Veröffentlichungstag der Anmeldung:
**25.09.2019   Patentblatt 2019/39**

(73) Patentinhaber: **Vitesco Technologies GmbH**
**30165 Hannover (DE)**

(72) Erfinder:
• **BRAUN, Tobias**
**93152 Undorf (DE)**

• **DELP, Matthias**
**93077 Bad Abbach (DE)**
• **MAURER, Frank**
**93128 Regenstauf (DE)**

(74) Vertreter: **Waldmann, Georg Alexander**
**Continental Automotive GmbH**
**Patente und Lizenzen**
**Postfach 22 16 39**
**80506 München (DE)**

(56) Entgegenhaltungen:
**DE-A1-102004 041 526      DE-A1-102015 209 665**
**DE-B3-102008 028 722      DE-B3-102011 088 403**

**Beschreibung**

Die vorliegende Erfindung betrifft ein Verfahren, mit dem Verschleißerscheinungen des Ventiltriebes und damit einhergehende Abweichungen in der Positionsgenauigkeit des Ventiltriebes und somit Abweichungen in den Ventilsteuerzeiten ermittelt und überwacht werden können und das eine Plausibilisierung von ermittelten Abweichungswerten ermöglicht. Weiterhin betrifft die Erfindung ein elektronisches Motorsteuergerät zur Ausführung des genannten Verfahrens.

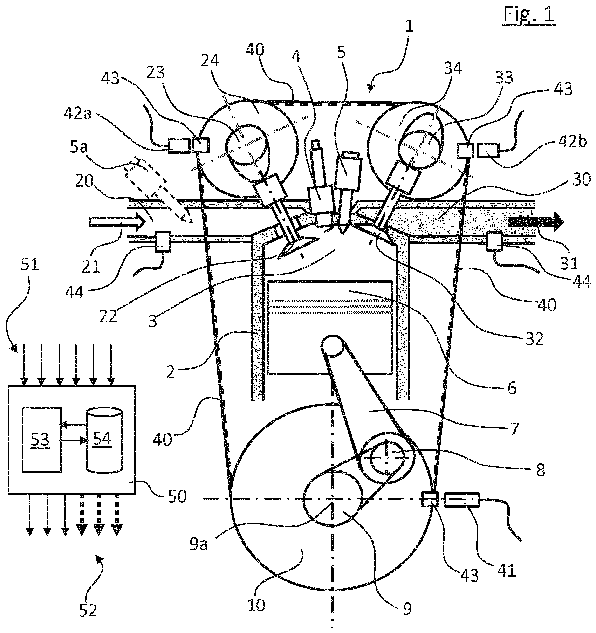

Hubkolben-Verbrennungsmotoren, die im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinder eines ggf. auch mehrzylindrigen Verbennungsmotors mit den wichtigsten Funktionseinheiten darstellt. Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet und zum Antrieb des Hubkolbens 6 expandierend verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch oder auch nur Frischluft (bei Kraftstoff-Direkteinspritzung) aus dem Luft-Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines, zu einem Kraftstoff-Zuführsystem gehörenden, Einspritzventils 5 direkt in den Brennraum 3 eingespritzt. Im folgenden Arbeitstakt wird das Kraftstoff-Luft-Gemisch, bei einem Otto-Motor mittels einer Zündkerze 4 und bei einem Dieselmotor durch Selbstentzündung, gezündet, expandierend verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas aus dem Brennraum 3 in den Abgas-Auslasstrakt 30 ausgeschoben.

Die Abgrenzung des Brennraumes 3 zum Luft-Ansaugtrakt 20 oder Abgas-Auslasstrakt 30 des Verbrennungsmotors erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und die Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. Die oben dargestellte Antriebsstrecke zwischen Kurbelwelle und den Nockenwellen wird hier im Weiteren als Ventiltrieb bezeichnet.

In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt. In sehr ähnlicher Weise gestaltet sich die Kopplung zwischen Einlassnockenwelle 23 und der Auslassnockenwelle 33 und der Kurbelwelle 9 mittels Kettenrädern und einer Steuerkette. Diese beiden Ausführungen stellen die derzeit gebräuchlichsten Ausführungsformen des Ventiltriebes dar.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

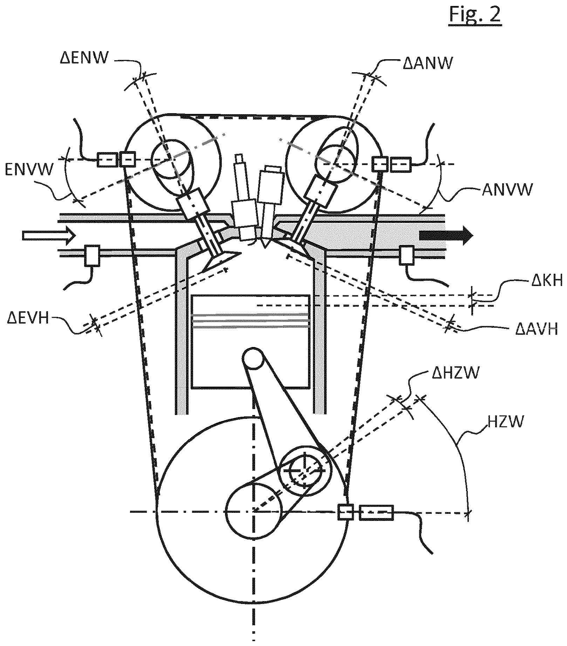

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle 9 die jeweilige Arbeitsphase. Die jeweiligen Drehlagen der Kurbelwelle 9, der Einlassnockenwelle 23 und der Auslassnockenwelle 33 sowie die Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel HZW (Figur 2), ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassventilhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken können. Diese sind als sogenannte Phasensteller bei sogenannten variablen Ventiltrieben bekannt.

Symbolisch ist auch ein elektronisches, programmierbares Motorsteuergerät 50 (CPU) zur Steuerung der Motorfunktionen dargestellt, das mit Signal-Eingängen 51 zur Entgegennahme der vielfältigen Sensorsignale und mit Signal- und Leistungs-Ausgängen 52 zur Ansteuerung entsprechender Stelleinheiten und Aktuatoren sowie mit einer elektronischen Recheneinheit 53 und einer zugeordneten elektronischen Speichereinheit 54 ausgestattet ist.

Für einen optimalen Betrieb des Verbrennungsmotors, bezüglich Emissionen, Verbrauch, Leistung, Laufruhe etc., sollte die während des Ansaugtaktes in den Brennraum eingebrachte Frischgasladung bestmöglich bekannt sein, um die weiteren Parameter für die Verbrennung, wie zum Beispiel die zuzuführende, ggf. direkt eingespritzte Kraftstoffmenge darauf abstimmen zu können. Der sogenannte Ladungswechsel, also das Ansaugen von Frischgas und das Ausschieben des Abgases ist dabei in großem Maße abhängig von den Steuerzeiten der Einlassventile 22 und Auslassventile 32, also vom zeitlichen Verlauf der jeweiligen Ventilhübe in Bezug auf den zeitlichen Verlauf des Kolbenhubs. In anderen Worten ist der Ladungswechsel im Betrieb abhängig von den Phasenlagen der Ein- und Auslassventile in Relation zum Kurbelwellen-Phasenwinkel und somit zur Phasenlage des Hubkolbens.

Stand der Technik zur Ermittlung der Frischgasladung und zur Abstimmung der Steuerparameter des Verbrennungsmotors darauf, ist die Vermessung eines sogenannten Referenz-Verbrennungsmotors in allen auftretenden Betriebszuständen, zum Beispiel in Abhängigkeit von der Drehzahl, der Last, ggf. der durch Phasensteller vorgebbaren Ventilsteuerzeiten, ggf. den Betriebsparametern von Abgasturbolader oder Kompressor, etc. und die Speicherung von diesen Messwerten oder Derivaten davon oder von das Verhalten wiedergebenden Modellansätzen auf dem Motorsteuergerät eines entsprechenden Serien-Verbrennungsmotors. Alle baugleichen, in Serie produzierten Verbrennungsmotoren der gleichen Baureihe werden dann mit diesem erzeugten Referenz-datensatz betrieben.

Eine, zum Beispiel durch Fertigungstoleranzen oder Verschleiß verursachte, Abweichung der tatsächlichen Relativpositionen zwischen Einlass- und Auslassventilen und dem Kurbelwellen-Phasenwinkel bzw. der Hubkolbenposition eines Serien-Verbrennungsmotors in Bezug auf die idealen Referenzpositionen des Referenz-Verbrennungsmotors, also eine Phasendifferenz des Einlassventilhubs und des Auslassventilhubs in Bezug auf den durch den Kurbelwellen-Lagesensor vorgegebenen Kurbelwellen-Phasenwinkel bzw. die Phasenlage der Kurbelwelle und somit den Kolbenhub führt dazu, dass die tatsächlich angesaugte Frischgasladung von der als Referenz bestimmten Frischgasladung abweicht und somit die auf dem Referenz-Datensatz basierenden Steuerparameter nicht optimal sind. Beim Betrieb des Verbrennungsmotors können sich durch diese Fehler negative Auswirkungen bezüglich Emissionen, Verbrauch, Leistung, Laufruhe etc. ergeben.

Zur Veranschaulichung der an einem Serien-Verbrennungsmotor auftretenden möglichen Abweichungen und zur Definition der Benennung dieser Abweichungen im Weiteren wird Bezug genommen auf Figur 2, die den Verbrennungsmotor aus Figur 1 zeigt, in der jedoch, zur besseren Übersichtlichkeit die in Figur 1 dargestellten Bezugszeichen weggelassen sind und nur die entsprechenden Abweichungen bezeichnet sind.

Ausgehend von einer Referenzposition des an dem Kurbelwellen-Steueradapter 10 angeordneten Lagegeber 43, dessen Phasenwinkel von dem Kurbelwellen-Lagesensor 41 erfasst wird, ergeben sich mehrere Toleranzketten, die zu Abweichungen der Phasenlagen, im Folgenden auch als Phasendifferenzen bezeichnet, von Hubkolben 6, Einlassventilen 22 und Auslassventilen 32 gegenüber den idealen Referenz-Phasenlagen führen.

Dabei ergibt sich die Kolbenhub-Phasendifferenz ΔKH zum Beispiel aus einer Abweichung des Hubzapfenwinkels HZW, der sogenannten Hubzapfen-Winkeldifferenz ΔHZW, in Relation zur Referenzposition des Kurbelwellen-Lagesensors 41, und aus verschiedenen Maßtoleranzen (nicht dargestellt) von Pleuel 7 und Hubkolben 6.

Weiterhin ergibt sich die Einlassventilhub-Phasendifferenz ΔEVH zum Beispiel aus einer Abweichung der Nockenposition, der sogenannten Einlassnockenwellen-Winkeldifferenz ΔENW aufgrund von mechanischen Toleranzen oder Verformungen (nicht dargestellt) der Nockenwelle selbst, des Einlassnockenwellen-Steueradapters 24 und des Steuergetriebes 40. Sofern ein Phasenversteller für die Einlassnockenwelle vorhanden ist, kommt ggf. noch ein Einlassnockenwellen-Verstellwinkel ENVW bzw. eine Abweichung dessen von der Vorgabe in Betracht.

In gleicher Weise ergibt sich die Auslassventilhub-Phasendifferenz ΔAVH zum Beispiel aus einer Abweichung der Nockenposition, der sogenannten Auslassnockenwellen-Winkeldifferenz ΔANW aufgrund von mechanischen Toleranzen oder Verformungen (nicht dargestellt) der Nockenwelle selbst, des Auslassnockenwellen-Steueradapters 24 und des Steuergetriebes 40. Sofern ein Phasenversteller für die Auslassnockenwelle vorhanden ist, kommt ggf. noch ein Auslassnockenwellen-Verstellwinkel ANVW bzw. eine Abweichung dessen von der Vorgabe in Betracht.

Häufig treten Abweichungen, in Form von Einlassnockenwellen-Winkeldifferenz ΔENW und Auslassnockenwellen-Winkeldifferenz ΔANW aufgrund von Verschleißerscheinungen wie zum Beispiel die im Betrieb auftretende Längung von Steuerketten oder Zahnriemen, sowie der Verschleiß der Kettenräder bzw. Riemenräder oder auch Zahnräder auf. In diesem Zusammenhang können im ungünstigen Fall auch ganze Zahnsprünge, also das Durchrutschen der Steuerkette oder des Zahnriemens um einen oder gar mehrere Zähne auftreten.

Solche Abweichungen lassen sich nicht, wie zum Beispiel fertigungsbedingte mechanische Toleranzen, durch einmalige Vermessung des Verbrennungsmotors vor Inbetriebnahme erfassen und korrigieren, da sie sich erst im Betrieb einstellen und ggf. permanent schleichend verändern.

Um dieser Problematik zu begegnen arbeiten die meisten derzeit bekannten Systeme mit einem Bezugspunktsystem (Lagegeber-Feedback). Hierbei wird an der Kurbelwelle sowie der Einlassnockenwelle und/oder der Auslassnockenwelle oder auch an dem jeweiligen Kurbelwellen-Steueradapter sowie dem Einlassnockenwellen-Steueradapter und/oder dem Auslassnockenwellen-Steueradapter oder auch an einem ggf. vorhandenen Phasensteller etc. jeweils ein Lagegeber als Positionsmarke gesetzt, welche mit einem Sensor erfasst werden kann. Dadurch kann die relative Phasenlage der jeweiligen Einlassnockenwelle und/oder Auslassnockenwelle in Bezug auf die Position der Kurbelwelle ermittelt und Abweichungen zu den angestrebten Referenzwerten identifiziert werden. Den unerwünschten Auswirkungen dieser Abweichungen kann dann durch eine Adaption oder Korrektur entsprechender Steuerparameter, in Abhängigkeit von den ermittelten Abweichungen, im Steuergerät entgegengewirkt werden.

Entsprechende Verfahren sind beispielsweise aus den Dokumenten DE 195 03 457 C1, EP 1 915 516 B1 und FR 2 850 755 B1 bekannt.

Auch das Dokument DE 10 2004 041 526 A1 offenbart ein Verfahren zur Überprüfung der Abweichung einer Winkelstellung eines Istwertes einer insbesondere kontinuierlich verstellbaren Nockenwelle zur Kurbelwelle von einem vorgebbaren Sollwert, mit Sensoren, die die Nockenwellen- und Kurbelwellenposition bestimmen und mit einem Steuergerät in Signalverbindung stehen.

Aus Dokument DE 10 2011 088 403 B3 ist zudem ein Verfahren zum Bestimmen eines Werts für einen Ventilhub eines Ventils eines individuellen Zylinders einer Brennkraftmaschine mit mehreren Zylindern, bekannt, bei dem ein erster Abgaslambdawert für eine Kraftstoffverbrennung in dem individuellen Zylinder und eine Luftmasse, welche von allen Zylindern der Brennkraftmaschine angesaugt wird, ermittelt wird und daraus ein Wert für den Ventilhub des Ventils des individuellen Zylinders bestimmt wird.

Andererseits wird durch das Dokument DE 10 2015 209 665 A1 ein Verfahren zur Identifizierung von Steuerzeiten, insbesondere Ventilsteuerzeiten, von Verbrennungsmotoren beschrieben. Es werden dazu dynamische Druckschwingungen im Einlass- und/oder Auslasstrakt des betreffenden Serien-Verbrennungsmotors gemessen und ein Kurbelwellenpositions-Feedbacksignal ermittelt. Mit Hilfe einer Analyse der gemessenen Werte werden die tatsächlichen Ventilsteuerzeiten des betreffenden Serien-Verbrennungsmotors ermittelt. Durch Vergleich der ermittelten Ventilsteuerzeiten mit Referenzwerten, die den Idealfall repräsentieren, können daraus eine Einlassventilhub-Phasendifferenz und eine Auslassventilhub-Phasendifferenz ermittelt werden.

Weiterhin sind, in den bereits veröffentlichten Patentanmeldungen, DE 10 2015 222 408 B3, DE 10 2016 219 584 A1 und DE 10 2016 219 582 A1 der Anmelderin, verschiedene Verfahren dargestellt, die eine Ermittlung der Einlassventilhub-Phasendifferenz, der Auslassventilhub-Phasendifferenz und ggf. der Kolbenhub-Phasendifferenz auf Grundlage von dynamischen Druckschwingungen der Ansaugluft im Ansaugtrakt des jeweiligen Verbrennungsmotors, unabhängig von entsprechenden Lagegebern und Lagesensoren an den Nockenwellen, im Betrieb ermöglichen.

Unter dem Begriff "Luft-Ansaugtrakt" oder auch einfach "Ansaugtrakt", "Ansaugsystem" oder "Einlasstrakt" eines Verbrennungsmotors fasst der Fachmann dabei alle Komponenten, die der Luftzuführung zu den jeweiligen Brennräumen der Zylinder dienen und somit den sogenannten Luftpfad definieren zusammen. Dazu können zum Beispiel ein Luftfilter, ein Ansaugrohr, Ansaugkrümmer oder Verteilerrohr oder kurz Saugrohr, ein Drosselklappenventil, sowie ggf. ein Verdichter und die Ansaugöffnung im Zylinder bzw. der Einlasskanal des Zylinders gehören.

Immer strenger werdende gesetzliche Vorschriften in Bezug auf die Betriebssicherheit eines Verbrennungsmotors, insbesondere im Hinblick auf die verursachten Abgas-Emissionen, erfordern es, dass die zur entsprechenden Steuerung des Verbrennungsmotors erfassten und herangezogenen Sensor- und Betriebsdaten selbst, im laufenden Betrieb ständig überwacht und im Rahmen einer Eigendiagnose plausibilisiert bzw. auf Fehlerhaftigkeit überprüft werden. In Bezug auf die im Ventiltrieb eines Verbrennungsmotors auftretenden und mit den oben genannten, aus dem Stand der Technik bekannten Verfahren erfassten Abweichungen, ist dies bisher nicht möglich, da ein entsprechend redundanter Wert zur Plausibilisierung bisher nicht zur Verfügung gestanden hat.

Der vorliegenden Erfindung liegt deshalb die Aufgabe zugrunde, ein Verfahren und ein Motorsteuergerät anzugeben, mit denen ein einem konventionell ermittelten Ventiltrieb-Abweichungswert vergleichbarer Ventiltrieb-Abweichungswert, möglichst ohne zusätzlichen gerätetechnischen Aufwand, zur Verfügung gestellt werden kann, so dass die beiden Ventiltrieb-Abweichungswerte zur gegenseitigen Plausibilisierung herangezogen werden können. Diese Aufgabe wird erfindungsgemäß durch ein Verfahren zur Erkennung von im Ventiltrieb eines Verbrennungsmotors auftretenden Abweichungen, gemäß dem Hauptanspruch und ein elektronisches, programmierbares Motorsteuergerät, gemäß dem nebengeordneten Anspruch, gelöst. Ausführungsbeispiele und Weiterbildungen des erfindungsgemäßen Gegenstandes sind Gegenstand der Unteransprüche.

Erfindungsgemäß ist das Verfahren zur Erkennung von im Ventiltrieb eines Verbrennungsmotors auftretenden Abweichungen, dadurch gekennzeichnet, dass eine Einlassventilhub-Phasendifferenz und/oder eine Auslassventilhub-Phasendifferenz mittels Analyse von dynamischen Druckschwingungen der Ansaugluft im Luft-Ansaugtrakt des betreffenden Verbrennungsmotors im Betrieb ermittelt werden und daraus ein Ventilhub-Phasen-Abweichungswert in Bezug auf einen Ventilhub-Phasen-Referenzwert ermittelt wird, wobei auf Basis des Ventilhub-Phasen-Abweichungswertes ein erster Ventiltrieb-Abweichungswert ermittelt wird.

Da bei diesem Verfahren die Einlassventilhub-Phasendifferenz und/oder eine Auslassventilhub-Phasendifferenz direkt ermittelt wird, sich jedoch zwischen der Kurbelwelle und den Einlass- und Auslassventilen außer dem Ventiltrieb noch weitere Übertragungskomponenten, wie zum Beispiel die Nocken der Nockenwelle selbst oder die Verbindung zwischen Nockenwelle und dem jeweiligen Nockenwellen-Steueradapter befinden, entspricht der Ventiltrieb-Abweichungswert nicht unmittelbar der ermittelten Einlassventilhub-Phasendifferenz und/oder der Auslassventilhub-Phasendifferenz. So ist zum Beispiel bereits bei Erstinbetriebnahme eine Einlassventilhub-Phasendifferenz und/oder eine Auslassventilhub-Phasendifferenz gegeben, wogegen in Bezug auf den Ventiltrieb davon ausgegangen wird, dass bei der Erstinbetriebnahme der Ventiltrieb in Sollposition justiert ist und zunächst keine Abweichung aufweist. Ein Ventiltrieb-Abweichungswert stellt sich in Bezug auf die justierte anfängliche Sollposition als Referenzwert, erst im Laufe des fortdauernden Betriebs ein. Dem entsprechend wird auch die bei Erstinbetriebnahme ermittelte Einlassventilhub-Phasendifferenz und/oder Auslassventilhub-Phasendifferenz ermittelt und als Ventilhub-Phasen-Referenzwert abgespeichert, auf den in allen weiteren Messungen Bezug genommen wird. Die Differenz zwischen der jeweiligen aktuell ermittelten Einlassventilhub-Phasendifferenz und/oder der Auslassventilhub-Phasendifferenz und dem zugehörigen Ventilhub-Phasen-Referenzwert ergibt einen Ventilhub-Phasen-Abweichungswert, auf dessen Basis, zum Beispiel unter Einbeziehung des Übersetzungsverhältnisses des Ventiltriebes der Ventiltrieb-Abweichungswert ermittelt werden kann.

Das erfindungsgemäße elektronische, programmierbare Motorsteuergerät zur Steuerung eines Verbrennungsmotors, weist eine zugeordneten elektronischen Recheneinheit und eine zugeordnete elektronische Speichereinheit auf und ist dadurch gekennzeichnet, dass die elektronische Recheneinheit und die elektronische Speichereinheit unter anderem dazu eingerichtet sind, ein Verfahren gemäß einem der vorausgehenden Ansprüche auszuführen und mittels des Motorsteuergerätes den Verbrennungsmotor entsprechend zu steuern. Dazu sind beispielsweise ein entsprechender Programm-Algorithmus und die erforderlichen Referenzwerte in der elektronischen Speichereinheit abgelegt, die dann zur Ausführung mittels der elektronischen Recheneinheit abgerufen werden.

Das erfindungsgemäße Verfahren und das erfindungsgemäße Motorsteuergerät haben den Vorteil, dass ohne zusätzliche Sensorik und besonderen gerätetechnischen Aufwand ein Ventiltrieb-Abweichungswert unabhängig von Lagegebern und Lagesensoren, die dem Ventiltrieb zugeordnet sind, ermittelt werden kann und so die Möglichkeit einer Plausibilisierung des Ventiltrieb-Abweichungswertes geschaffen ist.

Die Ausführungsbeispiele und Weiterbildungen des erfindungsgemäßen Gegenstandes, gemäß den Unteransprüchen, werden im Weiteren mit Bezug auf die Figuren erläutert, dazu zeigen:

Fig. 1:    Eine vereinfachte Schemazeichnung eines Hubkolben-Verbrennungsmotors
Fig. 2:    Die Schemazeichnung gemäß Fig. 1 mit Kennzeichnung der möglichen Lage- und Winkelabweichungen maßgeblicher Komponenten des Hubkolben-Verbrennungsmotors

Fig. 3: Eine vereinfachte Darstellung des Verfahrensablaufes inklusive entsprechender Weiterbildungen gemäß der Unteransprüche, in Blockdiagramm-Darstellung.

Fig. 4: Ein zweidimensionales Diagramm zur beispielhaften Darstellung des Verlaufes unterschiedlicher Ventiltrieb-Abweichungswerte über die Betriebsdauer eines Verbrennungsmotors mit eingetragenem Ventiltrieb-Abweichungs-Grenzwert.

Fig. 5: Ein zweidimensionales Diagramm zur beispielhaften Darstellung des Verlaufes eines Ventiltrieb-Abweichungs-Differenzwertes über die Betriebsdauer eines Verbrennungsmotors mit eingetragenem Ventiltrieb-Abweichungsdifferenz-Grenzwert

Funktions- und Benennungsgleiche Teile sind in den Figuren durchgängig mit denselben Bezugszeichen versehen.

Die in den Figuren 1 und 2 gezeigte schematische Darstellung eines Hubkolben-Verbrennungsmotors 1 mit den im Zusammenhang mit dem Gegenstand dieser Patentanmeldung maßgeblichen Funktions-Komponenten sowie der auftretenden möglichen Abweichungen und zur Definition der Benennung dieser Abweichungen, wurde bereits einleitend erläutert.

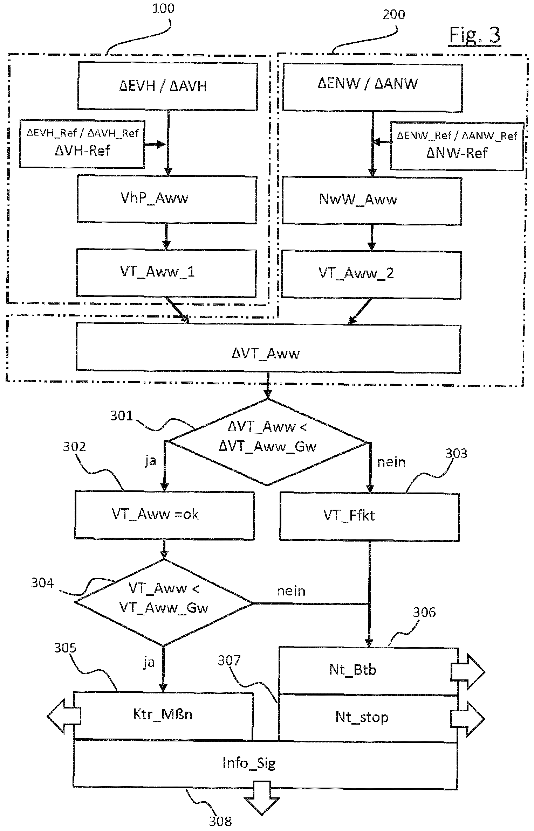

Figur 3 zeigt ein vereinfachtes, schematisches Blockdiagramm zur Beispielhaften Darstellung eines Verfahrensablaufs gemäß der Erfindung. In dem durch die Umrahmung 100 zusammengefassten Bereich des Diagramms sind die maßgeblichen Schritte des Verfahrens zur Erkennung von im Ventiltrieb eines Verbrennungsmotors auftretenden Abweichungen zusammengefasst. Das Verfahren ist dadurch gekennzeichnet, dass zunächst eine Einlassventilhub-Phasendifferenz $\Delta$EVH und/oder eine Auslassventilhub-Phasendifferenz $\Delta$AVH mittels Analyse von dynamischen Druckschwingungen der Ansaugluft im Luft-Ansaugtrakt 20 des betreffenden Verbrennungsmotors 1 im Betrieb ermittelt werden.

Aus der Einlassventilhub-Phasendifferenz $\Delta$EVH oder aus der Auslassventilhub-Phasendifferenz $\Delta$AVH oder aus beiden Werten zusammen, zum Beispiel durch Mittelwertbildung (($\Delta$EVH+$\Delta$AVH)/2), wird dann in Bezug auf einen zugeordneten Ventilhub-Phasen-Referenzwert $\Delta$VH_Ref, zum Beispiel ein Einlassventilhub-Phasen-Referenzwert $\Delta$EVH_Ref oder ein Auslassventilhub-Phasen-Referenzwert $\Delta$AVH_Ref, ein Ventilhub-Phasen-Abweichungswert VhP_Aww ermittelt. Dies kann beispielsweise auf einfache Weise durch Differenzbildung gemäß

$$\text{VhP\_Aww} = \Delta\text{EVH} - \Delta\text{EVH\_Ref}$$

oder

$$\text{VhP\_Aww} = \Delta\text{AVH} - \Delta\text{AVH\_Ref}$$

oder

$$\text{VhP\_Aww} = ((\Delta\text{EVH} + \Delta\text{AVH})/2) - \Delta\text{VH\_Ref}$$

erfolgen.

Die entsprechenden Ventilhub-Phasen-Referenzwerte $\Delta$VH_Ref, $\Delta$EVH_Ref, $\Delta$AVH_Ref sind beispielsweise Werte, die bei der Erstinbetriebnahme des Verbrennungsmotors ermittelt wurden und in einer elektronischen Speichereinheit des Motorsteuergerätes des Verbrennungsmotors abgelegt sind.

Im Anschluss daran wird dann auf Basis des Ventilhub-Phasen-Abweichungswertes VhP_Aww ein erster Ventiltrieb-Abweichungswert VT_Aww_1 ermittelt. Dies kann Beispielsweise unter Einbeziehung der Übersetzungsverhältnisse zwischen den Einlassventilen 22 bzw. Auslassventilen 32 und der Kurbelwelle 9 erfolgen.

Zur Ermittlung der Einlassventilhub-Phasendifferenz $\Delta$EVH und/oder eine Auslassventilhub-Phasendifferenz $\Delta$AVH kann in vorteilhafter weiterer Ausführung des Verfahrens zum Beispiel eines der Verfahren, aus den veröffentlichten Patentanmeldungen DE 10 2015 209 665 A1, DE 10 2015 222 408B3, DE 10 2016 219 584 A1 und DE 10 2016 219 582 A1 der Anmelderin, herangezogen werden.

Durch die dargestellten Verfahren, wird eine Ermittlung der Einlassventilhub-Phasendifferenz $\Delta$EVH, der Auslassventilhub-Phasendifferenz $\Delta$AVH und ggf. der Kolbenhub-Phasendifferenz $\Delta$KH auf Grundlage von dynamischen Druckschwingungen der Ansaugluft im Luft-Ansaugtrakt des jeweiligen Verbrennungsmotors, unabhängig von entsprechenden Lagegebern 43 und Lagesensoren 42 an den Nockenwellen, im Betrieb ermöglicht.

Dabei werden zum Beispiel im Betrieb des Verbrennungsmotors die dem jeweiligen Zylinder zuordenbaren dynamischen Druckschwingungen im Luft-Ansaugtrakt 20 gemessen und daraus ein entsprechendes Druckschwingungssignal erzeugt. Gleichzeitig wird ein Kurbelwellen-Phasenwinkelsignal ermittelt. Aus dem Druckschwingungssignal werden mit Hilfe Diskreter-Fourier-Transformation die Phasenlage und/oder die Amplitude zumindest einer ausgesuchten Signalfrequenz der gemessenen Druckschwingungen in Bezug auf das Kurbelwellen-Phasenwinkelsignal ermittelt.

Dann werden, auf Basis der ermittelten Phasenlagen und/oder Amplituden der jeweiligen ausgesuchten Signalfrequenzen, Linien gleicher Phasenlage bzw. gleicher Amplitude der jeweils gleichen Signalfrequenz mit Hilfe von in Referenzlinien-Kennfeldern gespeicherten oder mittels einer jeweiligen algebraischen Modell-Funktion ermittelten Referenzlinien der gleichen Phasenlage bzw. der gleichen Amplitude der jeweiligen Signalfrequenz ermittelt. Sodann werden die Einlassventilhub-Phasendifferenz und die Auslassventilhub-Phasendifferenz und ggf. die Kolbenhub-Phasendifferenz aus dem ermittelten gemeinsamen Schnittpunkt der Linien gleicher Phasenlagen und/oder der Linien gleicher Amplituden der jeweiligen Signalfrequenzen bestimmt.

Zur Analyse des Druckschwingungssignals, wird dieses einer Diskreten Fourier-Transformation (DFT) unterzogen. Dazu kann ein als Fast Fourier-Transformation (FFT) bekannter Algorithmus zur effizienten Berechnung der DFT herangezogen werden. Mittels DFT wird nun das Druckschwingungssignal in einzelne Signalfrequenzen zerlegt, die im Weiteren separat vereinfacht bezüglich ihrer Amplitude und der Phasenlage analysiert werden können.

Im vorliegenden Fall hat sich gezeigt, dass sowohl die Phasenlage als auch die Amplitude ausgesuchter Signalfrequenzen des Druckschwingungssignals in Abhängigkeit stehen zu den Ventilsteuerzeiten, also zu den Phasenverläufen des Einlassventilhubs und des Auslassventilhubs sowie des Kolbenhubs des Verbrennungsmotors. Die Phasenlage einer Signalfrequenz kennzeichnet dabei die relative Position des Signalfrequenzsignals in Bezug auf das Kurbelwellen-Drehwinkelsignal, die Amplitude ist ein Maß für die Ausschlaghöhe des Signalfrequenzsignals in Bezug auf eine Mittellinie.

Eine weiterführende Ausführung des erfindungsgemäßen Verfahrens ist dadurch gekennzeichnet, dass, wie in dem durch die Umrahmung 200 zusammengefassten Bereich des Diagramms der Figur 3 gezeigt, zusätzlich eine Einlassnockenwellen-Winkeldifferenz ΔENW und/oder eine Auslassnockenwellen-Winkeldifferenz ΔANW mittels einer Anordnung von Kurbelwellen-Lagesensor 41 und Einlassnockenwellen-Lagesensor 42a und/oder Auslass-Nockenwellen-Lagesensor 42b im Betrieb ermittelt werden und daraus ein zweiter Ventiltrieb-Abweichungswert VT_Aww_2 ermittelt wird. Der so ermittelte zweite Ventiltrieb-Abweichungswert VT_Aww_2 und der erste, vorzugsweise zeitlich parallel ermittelte Ventiltrieb-Abweichungswert VT_Aww_1 werden nun zur gegenseitigen Plausibilisierung miteinander verglichen, wobei ein Ventiltrieb-Abweichungs-Vergleichswert (ΔVT_Aww) gebildet wird. Dies hat den Vorteil, dass auf einfache Weise und ohne zusätzlichen gerätetechnischen Aufwand eine Plausibilisierung des Ventiltrieb-Abweichungswertes vorgenommen werden kann, da lediglich die Signale der ohnehin vorhandenen Sensor-Komponenten, insbesondere Druck- und Lagesensoren, auf die beschriebene Weise ausgewertet werden.

Zur Ermittlung des zweiten Ventiltrieb-Abweichungswert (VT_Aww_2) können zum Beispiel die aus dem Stand der Technik bekannten Verfahren herangezogen werden. Es kann jedoch auch, wie in Figur 3 dargestellt, in einer Vorgehensweise analog zur Ermittlung des ersten Ventiltrieb-Abweichungswert (VT_Aww_1) aus der Einlassnockenwellen-Winkeldifferenz ΔENW und/oder der Auslassnockenwellen-Winkeldifferenz ΔANW ein Nockenwellen-Winkel-Abweichungswert NwW_Aww in Bezug auf einen Einlassnockenwellen-Winkel-Referenzwert ΔENW-Ref, einen Auslassnockenwellen-Winkel-Referenzwert ΔANW-Ref oder einen gemeinsamen Nockenwellen-Winkel-Referenzwert ΔNW-Ref ermittelt werden. Auch hierbei können die Einlassnockenwellen-Winkeldifferenz ΔENW und die Auslassnockenwellen-Winkeldifferenz ΔANW getrennt oder in Kombination, zum Beispiele durch Mittelwertbildung ((ΔENW+ΔANW)/2) betrachtet werden. Dies kann beispielsweise auf einfache Weise durch Differenzbildung gemäß

$$NwW\_Aww = \Delta ENW - \Delta ENW\_Ref$$

oder

$$NwW\_Aww = \Delta ANW - \Delta ANW\_Ref$$

oder

$$NwW\_Aww = ((\Delta ENW + \Delta ANW)/2) - \Delta VH\_Ref$$

erfolgen.

Die entsprechenden Nockenwellen-Winkel-Referenzwerte $\Delta$NW-Ref, $\Delta$ENW_Ref, $\Delta$ANW_Ref sind beispielsweise Werte, die bei der Erstinbetriebnahme des Verbrennungsmotors ermittelt wurden und in einer elektronischen Speichereinheit des Motorsteuergerätes des Verbrennungsmotors abgelegt sind. Auf Basis des Nockenwellen-Winkel-Abweichungswertes NwW_Aww wird dann, vorzugsweise unter Einbeziehung der mechanischen Übersetzungsverhältnisse und ggf. der Winkelposition von Phasenverstellern der zweite Ventiltrieb-Abweichungswert (VT_Aww_2) ermittelt.

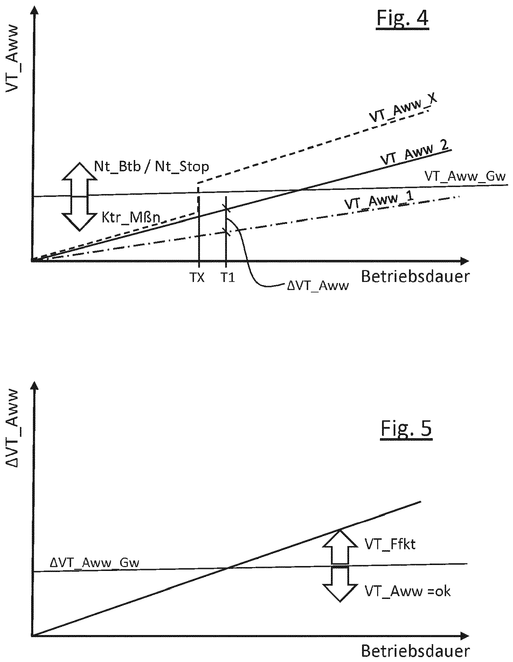

Figur 4 zeigt dazu verschiedene Verläufe von Ventiltrieb-Abweichungswerten VT_Aww über die Betriebsdauer des Verbrennungsmotors. Dargestellt ist ein mit VT_Aww_1 gekennzeichneter Verlauf eines ersten Ventiltrieb-Abweichungswertes und ein mit VT_Aww_2 gekennzeichneter Verlauf eines zweiten Ventiltrieb-Abweichungswertes. Beide Verläufe zeigen ein langsam stetiges Ansteigen des jeweiligen Ventiltrieb-Abweichungswertes, wobei der zweite Ventiltrieb-Abweichungswertes VT_Aww_2 stärker ansteigt als der erste Ventiltrieb-Abweichungswert VT_Aww_1. Eingetragen ist auch die Ermittlung des Ventiltrieb-Abweichungs-Vergleichswerts $\Delta$VT_Aww zu einem Zeitpunkt T1 als Abstand bzw. Differenz zwischen den Ventiltrieb-Abweichungswerten VT_Aww_1 und VT_Aww_2.

Ein solcher stetiger Verlauf der Ventiltrieb-Abweichungswerte kennzeichnet beispielsweise einen stetig ansteigenden Verschleiß der Übertragungselemente. Zur Veranschaulichung einer anderen Ursache für eine Abweichung im Ventiltrieb ist eine mit VT_Aww_X gekennzeichnete Kurve eingetragen. Diese Zeigt zu einem Zeitpunkt TX einen sprunghaften Anstieg des Ventiltrieb-Abweichungswertes VT_Aww_X, wie er beispielsweise bei einem Zahnsprung eines Zahnriemens, also beim Durchrutschen des Zahnreimens auf dem Zahnriemenrad um einen oder mehrere Zähne, auftreten würde.

Eine vorteilhafte Weiterbildung des erfindungsgemäßen Verfahrens, in Verbindung mit der gegenseitigen Plausibilisierung der Ventiltrieb-Abweichungswerte VT_Aww_1 und VT_Aww_2, und der Bildung eines Ventiltrieb-Abweichungs-Vergleichswert $\Delta$VT_Aww, ist dadurch gekennzeichnet, dass der erste und/oder der zweite Ventiltrieb-Abweichungswert VT_Aww_1 und VT_Aww_2 als Plausibel bewertet werden, solange der Ventiltrieb-Abweichungs-Vergleichswert $\Delta$VT_Aww einen festgelegten Ventiltrieb-Abweichungsvergleichs-Grenzwert $\Delta$VT_Aww_Gw nicht überschreitet. Diese Vorgehesnweise ist in dem Blockdiagramm der Figur 3 durch die Ablaufschritte 301 und 302 dargestellt. In Ablauf schritt 301 wird der ermittelte Ventiltrieb-Abweichungs-Vergleichswert $\Delta$VT_Aww daraufhin überprüft ob er kleiner oder größer ist als ein vorgegebener, zuvor festgelegter, Ventiltrieb-Abweichungsvergleichs-Grenzwert $\Delta$VT_Aww_Gw. Ist der Ventiltrieb-Abweichungs-Vergleichswert $\Delta$VT_Aww kleiner, so werden die ermittelten Ventiltriebabweichungswerte im Ablaufschritt 302 als plausibel bewertet VT_Aww=ok und können als Eingangsgröße für entsprechende Steuerungsalgorithmen des Verbrennungsmotors herangezogen werden. Dies gewährleistet eine Art Eigendiagnose underhöht die störungsfreie Betriebssicherheit des Verbrennungsmotors. Dieser Zusammenhang ist auch in dem Diagramm in Figur 5 dargestellt. Hier ist ein Beispiel eines Verlaufs des Ventiltrieb-Abweichungs-Vergleichswerts $\Delta$VT_Aww über der Betriebsdauer des Verbrennungsmotors dargestellt und zeigt einen stetig ansteigenden Verlauf des Ventiltrieb-Abweichungs-Vergleichswerts $\Delta$VT_Aww. Weitehin eingetragen ist der Ventiltrieb-Abweichungsvergleichs-Grenzwert $\Delta$VT_Aww_Gw. Solange der Ventiltrieb-Abweichungs-Vergleichswerts $\Delta$VT_Aww unterhalb des $\Delta$VT_Aww_Gw liegt wird der zugrundeliegende Ventiltrieb-Abweichungswert VT_Aww als ok, also als plausibel bewertet.

In einer weiteren vorteilhaften Ausführung des Verfahrens, in Verbindung mit der gegenseitigen Plausibilisierung der Ventiltrieb-Abweichungswerte VT_Aww_1 und VT_Aww_2 und der Bildung eines Ventiltrieb-Abweichungs-Vergleichswert $\Delta$VT_Aww, wird eine Fehlfunktion VT_Ffkt im Bereich des Ventiltriebs erkannt, sobald der Ventiltrieb-Abweichungs-Vergleichswert $\Delta$VT_Aww einen festgelegten Ventiltrieb-Abweichungsvergleichs-Grenzwert $\Delta$VT_Aww_Gw mindestens einmal überschreitet. Diese ist in Figur 3 durch die Ablaufschritte 301 und 303 sowie in Figur 5 durch den Bereich oberhalb des Ventiltrieb-Abweichungsvergleichs-Grenzwertes $\Delta$VT_Aww_Gw symbolisiert. Auf diese Weise kann eine schwerwiegende Fehlfunktion des Ventiltriebes zuverlässig erkannt und ggf. Maßnahmen zur Verhinderung noch größerer Schäden getroffen werden. Eine solche Fehlfunktion kann beispielsweise verursacht sein durch einen Defekt oder eine Fehlpositionierung des Einlassnockenwellen-Lagesensors, des Auslassnockenwellen-Lagesensors oder des Kurbelwellen-Lagesensors, sowie durch einen Defekt oder eine Fehlfunktion eines Phasenstellers der Einlassnockenwelle oder der Auslassnockenwelle. Selbstverständlich können in einem solchen Fall zunächst mehrere Messungen in Folge vorgenommen werden, um die erkannte Fehlfunktion zu bestätigen, die Erkennung einer Fehlfunktion also zu entprellen, und erst bei eindeutiger Bestätigung des Ergebnisses, Maßnahmen, wie zum Beispiel einen Notbetrieb oder gar eine Abschaltung des Verbrennungsmotors, zu ergreifen.

In Weiterführung des erfindungsgemäßen Verfahrens können ausgleichende steuerungstechnische Korrekturmaßnahmen Ktr_Mßn zur Steuerung des Verbrennungsmotors 1 und/oder eine Störungsmeldung Info_Sig mittels einer Steuerungseinheit 50 des Verbrennungsmotors 1 veranlasst werden, solange der erste und/oder der zweite Ventiltrieb-Abweichungswert VT_Aww_1, VT_Aww_2 als plausibel bewertet wurde und einen vorgegebenen Ventiltrieb-Abweichungs-Grenzwert VT_Aww_Gw nicht übersteigt. Dies ist in Figur 3 durch die Ablaufschritte 302, 304, 305 sowie 308 symbolisch dargestellt. Die Korrekturmaßnahmen Ktr_Mßn können dabei, unter Anderem, zum Beispiel die Anpassung des Einlassnockenwellen-Verstellwinkels ENVW sowie des Auslassnockenwellen-Verstellwinkels ANVW mittels der Phasensteller, die Anpassung des Zündzeitpunktes, des Einspritzbeginns und der Einspritzmenge betreffen.

Wenn jedoch der erste und/oder der zweite Ventiltrieb-Abweichungswert VT_Aww_1, VT_Aww_2 einen vorgegebenen Ventiltrieb-Abweichungs-Grenzwert VT_Aww_Gw übersteigt oder bereits vorher eine Fehlfunktion VT_Ffkt im Bereich des Ventiltriebs erkannt wurde, werden ein Notbetrieb Nt_Btb oder ein Notstop Nt_stop und/oder eine Störungsmeldung Info_Sig des Verbrennungsmotors 1 mittels einer Steuerungseinheit 50 des Verbrennungsmotors 1 veranlasst. Auf diese Weise kann auf verschiedene Gegebenheiten in der jeweils optimal angepassten Art und Weise reagiert werden um einen optimalen Betrieb des Verbrennungsmotors 1 zu gewährleisten. Dieser Ablauf ist in Figur 3 anhand der Ablaufschritte 302, 304, 306, 307 sowie 308 symbolisch dargestellt. Auch in Figur 4 ist die Überprüfung der Ventiltrieb-Abweichungswerte VT_Aww_1, VT_Aww_2 oder VT_Aww_X in Bezug auf einen Ventiltrieb-Abweichungs-Grenzwert VT_Aww_Gw dargestellt, wobei unterhalb des Ventiltrieb-Abweichungs-Grenzwertes VT_Aww_Gw Korrekturmaßnahmen Ktr_Mßn und oberhalb des Ventiltrieb-Abweichungs-Grenzwertes VT_Aww_Gw ein Notbetrieb Nt_Btb oder ein Notstop Nt_Stop eingeleitet werden.

In einer weiteren Ausführung des Verfahren wird der erste und/oder der zweite Ventiltrieb-Abweichungswert VT_Aww_1, VT_Aww_2 im Betrieb des Verbrennungsmotors kontinuierlich ermittelt und daraus ein jeweiliger Abweichungsverlauf des ersten und/oder des zweiten Ventiltrieb-Abweichungswertes VT_Aww_1, VT_Aww_2 über die Zeit erstellt, wie auch in Figur 4 dargestellt. Dabei wird jedoch nunmehr nicht auf ein Ergebnis zu einem bestimmten Zeitpunkt fokusiert sondern es wird auf Basis des jeweiligen Abweichungsverlaufs auf bestimmte Ursachen der Abweichungen im Ventiltrieb erkannt. Ein typisches Beispiel dafür ist der in Figur 4 gezeigte Verlauf VT_Aww_X, bei dem der Verlauf einen Zahnsprung erkennen lässt. So können vorteilhaft bestimmte Fehlfunktionen identifiziert und in angemessener Weise im Betrieb darauf reagiert werden oder die Art der Fehlfunktion wird in einem Fehlerspeicher festgehalten und kann zu Diagnosezwecken bei der Reparatur herangezogen werden.

Auf diese Weise kann in Weiterführung des Verfahrens bei kontinuierlich ansteigendem Betrag des Abweichungsverlaufs auf eine verschleißbedingte Ursache der Abweichung im Ventiltrieb erkannt werden, die je nach Ausführung des Ventiltriebes einer Kettenlängung, einer Zahnriemenlängung oder einem Getrieberadverschleiß entspricht und es kann weiterhin bei sprunghaft ansteigendem Betrag des Abweichungsverlaufs auf eine zahnsprungbedingte Ursache der Abweichung im Ventiltrieb erkannt werden.

Weiterhin ermöglicht das erfindungsgemäße Verfahren, dass anhand der Höhe eines aktuellen Abweichungswertes des Ventiltriebes, die Größe der Abweichung im Ventiltrieb, also zum Beispiel ein Wert für die Kettenlängung, bestimmt wird.

Für den Fall, dass ein Ventiltrieb Phasenversteller aufweist, versteht es sich, dass ein jeweils aktueller Phasen-Verstellwert bei der Ermittlung des ersten Abweichungswertes des Ventiltriebs mit einbezogen wird. In diesem Fall eröffnet sich auch die Möglichkeit, dass eine Abweichungsdifferenz, zwischen einem auf Basis der Einlassventilhub-Phasendifferenz $\Delta$EVH ermittelten aktuellen Ventiltrieb-Abweichungswert VT_Aww_E und einem auf Basis der Auslassventilhub-Phasendifferenz $\Delta$AVH ermittelten, weiteren, aktuellen Ventiltrieb-Abweichungswert VT_Aww_A, ermittelt wird und auf einen Defekt eines der Phasensteller erkannt wird, wenn die Differenz zwischen den beiden Ventiltrieb-Abweichungswerten einen festgelegten Grenzwert überschreitet.

In einer vorteilhaften Ausführung wird das erfindungsgemäße Verfahren ggf. inklusive aller vorausgehend beschriebenen Ausführungen und Weiterbildungen auf einer elektronischen Recheneinheit 53 ausgeführt, die einem elektronischen, programmierbaren Motorsteuergerät 50 des Verbrennungsmotors 1 zugeordnet ist und mit dieser in funktionaler Verbindung steht.

## Patentansprüche

1. Verfahren zur Erkennung von im Ventiltrieb eines Verbrennungsmotors auftretenden Abweichungen, **dadurch gekennzeichnet, dass**
eine Einlassventilhub-Phasendifferenz ($\Delta$EVH) und/oder eine Auslassventilhub-Phasendifferenz ($\Delta$AVH) mittels Analyse von dynamischen Druckschwingungen der Ansaugluft im Luft-Ansaugtrakt des betreffenden Verbrennungsmotors (1) im Betrieb ermittelt werden und daraus ein Ventilhub-Phasen-Abweichungswert (VhP_Aww) in Bezug auf einen Ventilhub-Phasen-Referenzwert ($\Delta$VH_Ref) ermittelt wird, wobei auf Basis des Ventilhub-Phasen-Abweichungswertes (VhP_Aww) ein erster Ventiltrieb-Abweichungswert (VT_Aww_1) ermittelt wird.

2. Verfahren gemäß Anspruch 1, **dadurch gekennzeichnet, dass** zusätzlich eine Einlassnockenwellen-Winkeldifferenz ($\Delta$ENW) und/oder eine Auslassnockenwellen-Winkeldifferenz($\Delta$ANW) mittels einer Anordnung von Kurbelwellen-Lagesensor (41) und Einlass-Nockenwellen-Lagesensor (42a) und/oder Auslass-Nockenwellen-Lagesensor (42b) im Betrieb ermittelt werden und daraus ein zweiter Ventiltrieb-Abweichungswert (VT_Aww_2) ermittelt wird und wobei der erste und der zweite Ventiltrieb-Abweichungswert zur gegenseitigen Plausibilisierung miteinander verglichen werden und ein Ventiltrieb-Abweichungs-Vergleichswert ($\Delta$VT_Aww) gebildet wird.

3. Verfahren gemäß Anspruch 2, **dadurch gekennzeichnet, dass** der erste und/oder der zweite Ventiltrieb-Abweichungswert als Plausibel bewertet werden, solange der Ventiltrieb-Abweichungs-Vergleichswert (ΔVT_Aww) einen vorgegebenen Ventiltrieb-Abweichungsvergleichs-Grenzwert (ΔVT_Aww_Gw) nicht überschreitet.

4. Verfahren gemäß Anspruch 2, **dadurch gekennzeichnet, dass** eine Fehlfunktion (VT_Ffkt) im Bereich des Ventiltriebs erkannt wird, sobald der Ventiltrieb-Abweichungs- Vergleichswert (ΔVT_Aww) einen festgelegten Ventiltrieb-Abweichungsvergleichs-Grenzwert (ΔVT_Aww_Gw) mindestens einmal überschreitet.

5. Verfahren nach Anspruch 3 oder 4, **dadurch gekennzeichnet, dass** ausgleichende steuerungstechnische Korrekturmaßnahmen (Ktr_Mßn) zur Steuerung des Verbrennungsmotors (1) und/oder eine Störungsmeldung (Info_Sig) mittels einer Steuerungseinheit (50) des Verbrennungsmotors (1) veranlasst werden, solange der erste und/oder der zweite Ventiltrieb-Abweichungswert(VT_Aww_1, VT_Aww_2) als plausibel bewertet wurden und einen vorgegebenen Ventiltrieb-Abweichungs-Grenzwert (VT_Aww_Gw) nicht übersteigt und

dass ein Notbetrieb oder ein Notstop und/oder eine Störungsmeldung des Verbrennungsmotors mittels einer Steuerungseinheit (50) des Verbrennungsmotors (1) veranlasst werden, wenn der erste und/oder der zweite Ventiltrieb-Abweichungswert (VT_Aww_1, VT_Aww_2) als plausibel bewertet wurden und einen vorgegebenen Ventiltrieb-Abweichungs-Grenzwert (VT_Aww_Gw) übersteigt oder bereits vorher eine Fehlfunktion (VT_Ffkt) im Bereich des Ventiltriebs erkannt wurde.

6. Verfahren nach einem der Ansprüche 1 oder 2, daduch gekennzeichnet, dass der erste und/oder der zweite Ventiltrieb-Abweichungswert (VT_Aww_1, VT_Aww_2) im Betrieb des Verbrennungsmotors (1) kontinuierlich ermittelt werden und daraus ein jeweiliger Abweichungsverlauf des ersten und/oder des zweiten Ventiltrieb-Abweichungswertes (VT_Aww_1, VT_Aww_2) über die Zeit erstellt wird, wobei

auf Basis des jeweiligen Abweichungsverlaufs auf bestimmte Ursachen der Abweichungen im Ventiltrieb erkannt wird.

7. Verfahren nach Anspruch 3, **dadurch gekennzeichnet, dass** bei kontinuierlich ansteigendem Betrag des Abweichungsverlaufs auf eine verschleißbedingte Ursache der Abweichung im Ventiltrieb erkannt wird, die je nach Ausführung des Ventiltriebes einer Kettenlängung, einer Zahnriemenlängung oder einem Getrieberadverschleiß entspricht und

dass bei sprunghaft ansteigendem Betrag des Abweichungsverlaufs auf eine zahnsprungbedingte Ursache der Abweichung im Ventiltrieb erkannt wird.

8. Verfahren nach Anspruch 1, **dadurch gekennzeichnet, dass** zur Ermittlung der Einlassventilhub-Phasendifferenz und/oder der Auslassventilhub-Phasendifferenz des Verbrennungsmotors im Betrieb,

- aus den gemessenen Druckschwingungen ein entsprechendes Druckschwingungssignal erzeugt wird, wobei gleichzeitig ein Kurbelwellen-Phasenwinkelsignal ermittelt wird;
- aus dem Druckschwingungssignal mit Hilfe Diskreter-Fourier-Transformation die Phasenlage und/oder die Amplitude zumindest einer ausgesuchten Signalfrequenz der gemessenen Druckschwingungen in Bezug auf das Kurbelwellen-Phasenwinkelsignal ermittelt werden;
- auf Basis der ermittelten Phasenlage und/oder Amplitude der jeweiligen ausgesuchten Signalfrequenz, jeweils in Abhängigkeit von Einlassventilhub-Phasendifferenz und Auslassventilhub-Phasendifferenz stehende Linien gleicher Phasenlage und/oder gleicher Amplitude der jeweils gleichen Signalfrequenz, mit Hilfe von Referenzlinien der gleichen Phasenlage und/oder der gleichen Amplitude der jeweiligen Signalfrequenz ermittelt werden;
- ein jeweiliger gemeinsamer Schnittpunkt der ermittelten Linien gleicher Phasenlage und/oder gleicher Amplitude ermittelt wird und
- die Einlassventilhub-Phasendifferenz und/oder die Auslassventilhub-Phasendifferenz aus dem ermittelten gemeinsamen Schnittpunkt bestimmt wird.

9. Verfahren nach einem der vorausgehenden Ansprüche, **dadurch gekennzeichnet, dass** das Verfahren auf einer elektronischen Recheneinheit (53) ausgeführt wird, die einem elektronischen, programmierbaren Motorsteuergerät (50) des Verbrennungsmotors (1) zugeordnet ist und mit dieser in funktionaler Verbindung steht.

10. Elektronisches, programmierbares Motorsteuergerät (50) zur Steuerung eines Verbrennungsmotors, mit einer zugeordneten elektronischen Recheneinheit (53) und einer zugeordneten elektronischen Speichereinheit (54), **dadurch gekennzeichnet, dass** die elektronische Recheneinheit (53) und die elektronische Speichereinheit (54) unter anderem dazu eingerichtet sind, ein Verfahren gemäß einem der vorausgehenden Ansprüche auszuführen und mittels des Motorsteuergerätes den Verbrennungsmotor (1) entsprechend zu steuern.

**Claims**

1.  Method for detecting deviations occurring in the valve drive of an internal combustion engine, **characterized in that** an inlet valve stroke phase difference ($\Delta$EVH) and/or an outlet valve stroke phase difference ($\Delta$AVH) are acquired by means of analysis of dynamic pressure oscillations of the intake air in the air intake tract of the respective internal combustion engine (1) during operation, and a valve stroke phase deviation value (VhP_Aww) with respect to a valve stroke phase reference value ($\Delta$VH_Ref) is acquired therefrom, wherein a first valve drive deviation value (VT_Aww_1) is acquired on the basis of the valve stroke phase deviation value (VhP_Aww).

2.  Method according to Claim 1, **characterized in that** in addition an inlet camshaft angle difference ($\Delta$ENW) and/or an outlet camshaft angle difference ($\Delta$ANW) are acquired by means of an arrangement of a crankshaft position sensor (41) and an inlet camshaft position sensor (42a) and/or outlet camshaft position sensor (42b) during operation, and a second valve drive deviation value (VT_Aww_2) is acquired therefrom, and wherein the first and the second valve drive deviation value are compared with one another for the purpose of reciprocal plausibility checking, and a valve drive deviation comparison value ($\Delta$VT_Aww) is formed.

3.  Method according to Claim 2, **characterized in that** the first and/or the second valve drive deviation value are evaluated as plausible as long as the valve drive deviation comparison value ($\Delta$VT_Aww) does not exceed a predefined valve drive deviation comparison limiting value ($\Delta$VT_Aww_Gw).

4.  Method according to Claim 2, **characterized in that** a malfunction (VT_Ffkt) during the operation of the valve drive is detected as soon as the valve drive deviation comparison value ($\Delta$VT_Aww) exceeds a stipulated valve drive deviation comparison limiting value ($\Delta$VT_Aww_Gw) at least once.

5.  Method according to Claim 3 or 4, **characterized in that** compensating control correction measures (Ktr_M$\beta$n) for controlling the internal combustion engine (1) and/or a fault message (Info_Sig) are brought about by means of a control unit (50) of the internal combustion engine (1) as long as the first and/or the second valve drive deviation values (VT_Aww_1, VT_Aww_2) have been evaluated as plausible and do not exceed a predefined valve drive deviation limiting value (VT_Aww_Gw) and **in that** an emergency operating mode or emergency stop and/or a fault message of the internal combustion engine are brought about by means of a control unit (50) of the internal combustion engine (1) if the first and/or the second valve drive deviation value (VT_Aww_1, VT_Aww_2) have been evaluated as plausible and exceed a predefined valve drive deviation limiting value (VT_Aww_Gw), or a malfunction (VT_Ffkt) has already been previously detected in the region of the valve drive.

6.  Method according to one of Claims 1 or 2, **characterized in that** the first and/or the second valve drive deviation values (VT_Aww_1, VT_Aww_2) are acquired continuously during the operation of the internal combustion engine (1), and a respective deviation profile of the first and/or of the second valve drive deviation value (VT_Aww_1, VT_Aww_2) is produced therefrom over time, wherein
    specific causes of the deviations in the valve drive are detected on the basis of the respective deviation profile.

7.  Method according to Claim 3, **characterized in that** when there is a continuously rising value of the deviation profile, a wear-induced cause of the deviation in the valve drive is detected, which cause corresponds, depending on the design of the valve drive, to a lengthening of a chain, lengthening of a toothed belt or to wear of a gear wheel, and **in that** when there is a suddenly rising value of the deviation profile, a tooth-jump-induced cause of the deviation in the valve drive is detected.

8.  Method according to Claim 1, **characterized in that**, in order to acquire the inlet valve stroke phase difference and/or the outlet valve stroke phase difference of the internal combustion engine during operation,

    - a corresponding pressure oscillation signal is generated from the measured pressure oscillations, and at the same time a crankshaft phase angle signal is acquired;
    - the phase position and/or the amplitude of at least one selected signal frequency of the measured pressure oscillations in relation to the crankshaft phase angle signal are acquired from the pressure oscillation signal using discrete Fourier transformation;
    - on the basis of the acquired phase position and/or amplitude of the respective selected signal frequency, in each case as a function of lines of an equal phase position and/or of equal amplitude of the respectively same signal frequency are acquired, which lines are dependent on the inlet valve stroke phase difference and the outlet valve stroke phase difference, using reference lines of the equal phase position and/or of the equal amplitude of the respective signal frequency;
- a respective common intersection point of the acquired lines of the equal phase position and/or equal amplitude is acquired, and
- the inlet valve stroke phase difference and/or the outlet valve stroke phase difference is determined from the acquired common intersection point.

9. Method according to one of the preceding claims, **characterized in that** the method is executed on an electronic computing unit (53) which is assigned to an electronic, programmable engine control unit (50) of the internal combustion engine (1) and is functionally connected thereto.

10. Electronic, programmable engine control unit (50) for controlling an internal combustion engine, having an assigned electronic computing unit (53) and an assigned electronic memory unit (54), **characterized in that** the electronic computing unit (53) and the electronic memory unit (54) are configured, *inter alia,* to execute a method according to one of the preceding claims and to correspondingly control the internal combustion engine (1) by means of the engine control unit.


**Revendications**

1. Procédé de détection d'écarts apparaissant dans le mécanisme de distribution d'un moteur à combustion interne, **caractérisé en ce**
qu'une différence de phase de course de soupape d'admission ($\Delta$EVH) et/ou une différence de phase de course de soupape d'échappement ($\Delta$AVH) sont déterminées lors du fonctionnement par analyse d'oscillations de pression dynamiques de l'air d'admission dans la tubulure d'admission d'air du moteur à combustion interne concerné (1) et, à partir de celles-ci, une valeur d'écart de phase de course de soupape (VhP_Aww) par rapport à une valeur de référence de phase de course de soupape ($\Delta$VH_Ref) est déterminée, une première valeur d'écart de mécanisme de distribution (VT_Aww_1) étant déterminée sur la base de la valeur d'écart de phase de course de soupape (VhP_Aww).

2. Procédé selon la revendication 1, **caractérisé en ce qu'**en outre une différence d'angle d'arbre à cames d'admission ($\Delta$ENW) et/ou une différence d'angle d'arbre à cames d'échappement ($\Delta$ANW) sont déterminées lors du fonctionnement au moyen d'un agencement d'un capteur de position de vilebrequin (41) et d'un capteur de position d'arbre à cames d'admission (42a) et/ou d'un capteur de position d'arbre à cames d'échappement (42b) et, à partir de celles-ci, une deuxième valeur d'écart de mécanisme de distribution (VT_Aww_2) est déterminée, et la première et la deuxième valeur d'écart de mécanisme de distribution étant comparées l'une à l'autre pour le contrôle de plausibilité réciproque et une valeur de comparaison d'écart de mécanisme de distribution ($\Delta$VT_Aww) étant formée.

3. Procédé selon la revendication 2, **caractérisé en ce que** la première et/ou la deuxième valeur d'écart de mécanisme de distribution sont évaluées comme étant plausibles si la valeur de comparaison d'écart de mécanisme de distribution ($\Delta$VT_Aww) ne dépasse pas une valeur limite de comparaison d'écart de mécanisme de distribution prédéfinie ($\Delta$VT_Aww_Gw).

4. Procédé selon la revendication 2, **caractérisé en ce qu'**un dysfonctionnement (VT_Ffkt) dans la région du mécanisme de distribution est détecté si la valeur de comparaison d'écart de mécanisme de distribution ($\Delta$VT_Aww) dépasse au moins une fois une valeur limite de comparaison d'écart de mécanisme de distribution prédéfinie ($\Delta$VT_Aww_Gw).

5. Procédé selon la revendication 3 ou 4, **caractérisé en ce que** des mesures de correction compensatrices de techniques de commande (Ktr_M$\beta$n) pour la commande du moteur à combustion interne (1) et/ou un message de défaut (Info_Sig) sont initiés au moyen d'une unité de commande (50) du moteur à combustion interne (1) si la première et/ou la deuxième valeur d'écart de mécanisme de distribution (VT_Aww_1, VT_Aww_2) ont été évaluées comme étant plausibles et ne dépassent pas une valeur limite d'écart de mécanisme de distribution prédéfinie (VT_Aww_Gw) et **en ce qu'**un fonctionnement d'urgence ou un arrêt d'urgence et/ou un message de défaut du moteur à combustion interne sont initiés au moyen d'une unité de commande (50) du moteur à combustion interne (1) lorsque la première et/ou la deuxième valeur d'écart de mécanisme de distribution (VT_Aww_1, VT_Aww_2) ont été évaluées comme étant plausibles et dépassent une valeur limite d'écart de mécanisme de distribution prédéfinie (VT_Aww_Gw) ou déjà précédemment un dysfonctionnement (VT_Ffkt) dans la région du mécanisme de distribution a été détecté.

**6.** Procédé selon l'une des revendications 1 ou 2, **caractérisé en ce que** la première et/ou la deuxième valeur d'écart de mécanisme de distribution (VT_Aww_1, VT_Aww_2) sont déterminées en continu lors du fonctionnement du moteur à combustion interne (1) et, à partir de celles-ci, une variation d'écart respective de la première et/ou de la deuxième valeur d'écart de mécanisme de distribution (VT_Aww_1, VT_Aww_2) au cours du temps est produite, et, sur la base de la variation d'écart respective, des causes déterminées des écarts dans le mécanisme de distribution étant détectées.

**7.** Procédé selon la revendication 3, **caractérisé en ce qu'**en cas de valeur croissant de manière continue de la variation d'écart, une cause, due à l'usure, de l'écart dans le mécanisme de distribution est détectée, laquelle cause correspond, en fonction de la conception du mécanisme de distribution, à un allongement de chaîne, un allongement de courroie dentée ou une usure de roue d'engrenage et

**en ce qu'**en cas de valeur croissant de manière brusque de la variation d'écart, une cause, due à un saut de dent, de l'écart dans le mécanisme de distribution est détectée.

**8.** Procédé selon la revendication 1, **caractérisé en ce que**, pour la détermination de la différence de phase de course de soupape d'admission et/ou de la différence de phase de course de soupape d'échappement du moteur à combustion interne lors du fonctionnement,

- un signal d'oscillation de pression correspondant est produit à partir des oscillations de pression mesurées, un signal d'angle de phase de vilebrequin étant déterminé simultanément ;
- à partir du signal d'oscillations de pression, à l'aide d'une transformation de Fourier discrète, la position de phase et/ou l'amplitude d'au moins une fréquence de signal sélectionnée des oscillations de pression mesurées par rapport au signal d'angle de phase de vilebrequin sont déterminées ;
- sur la base de la position de phase déterminée et/ou de l'amplitude de la fréquence de signal sélectionnée respective, des lignes de même position de phase et/ou de même amplitude de la même fréquence de signal respective, lesquelles lignes sont dépendantes de la différence de phase de course de soupape d'admission et de la différence de phase de course de soupape d'échappement, sont déterminées à l'aide de lignes de référence de la même position de phase et/ou de la même amplitude de la fréquence de signal respective ;
- un point d'intersection commun respectif des lignes déterminées de même position de phase et/ou de même amplitude est déterminé et
- la différence de phase de course de soupape d'admission et/ou la différence de phase de course de soupape d'échappement sont déterminées à partir du point d'intersection commun déterminé.

**9.** Procédé selon l'une des revendications précédentes, **caractérisé en ce que** le procédé est mis en œuvre sur une unité de calcul électronique (53) qui est associée à un module de commande de moteur programmable électronique (50) du moteur à combustion interne (1) et est en liaison fonctionnelle avec celui-ci.

**10.** Module de commande de moteur programmable électronique (50) servant à la commande d'un moteur à combustion interne, comprenant une unité de calcul électronique associée (53) et une unité de mémoire électronique associée (54), **caractérisé en ce que** l'unité de calcul électronique (53) et l'unité de mémoire électronique (54) sont entre autres conçues pour mettre en œuvre un procédé selon l'une des revendications précédentes et pour commander le moteur à combustion interne (1) de manière correspondante au moyen du module de commande de moteur.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19503457 C1
- EP 1915516 B1
- FR 2850755 B1
- DE 102004041526 A1
- DE 102011088403 B3
- DE 102015209665 A1
- DE 102015222408 B3
- DE 102016219584 A1
- DE 102016219582 A1